# EUROPÄISCHE PATENTSCHRIFT

(11) **EP 1 124 043 B1**
(45) Veröffentlichungstag und Bekanntmachung des Hinweises auf die Patenterteilung: **03.07.2002**
(21) Anmeldenummer: 01100415.7
(22) Anmeldetag: 08.01.2001
(51) Int. Cl.: F02B 31/08, F02D 9/10

(54) **Luftansaugkanalsystem für eine Brennkraftmaschine**
Air intake system for an internal combustion engine
Système d'admission d'air pour moteur à combustion interne

(30) Priorität: 08.02.2000 DE 10005431
(43) Veröffentlichungstag der Anmeldung: 16.08.2001
(73) Patentinhaber: Pierburg Aktiengesellschaft, 41460 Neuss (DE)
(72) Erfinder: Simons, Norbert, 40221 Düsseldorf (DE)
(74) Vertreter: Ter Smitten, Hans

(56) Entgegenhaltungen:
- EP-A- 0 480 607
- EP-A- 0 861 977
- WO-A-96/31692
- US-A- 5 696 318
- PATENT ABSTRACTS OF JAPAN vol. 009, no. 057 (M-363), 13. März 1985 (1985-03-13) & JP 59 192825 A (TOYOTA JIDOSHA KK), 1. November 1984 (1984-11-01)
- PATENT ABSTRACTS OF JAPAN vol. 1997, no. 01, 31. Januar 1997 (1997-01-31) & JP 08 232668 A (TOYOTA MOTOR CORP;DU PONT KK), 10. September 1996 (1996-09-10)

## Beschreibung

Die Erfindung betrifft ein Luftansaugkanalsystem für eine Brennkraftmaschine mit einem Saugrohr, das zwei zu jedem Zylinder führende Einzelkanäle aufweist, die sich von einem gemeinsamen Einlaßströmungsweg abzweigen, wobei jeweils einer der beiden Einzelkanäle eine Drallklappe aufweist, die in einem Trägerelement gelagert ist.

Derartige Luftansaugkanalsysteme (siehe z.B. EP 0861977) sind für Otto- und Dieselbrennkraftmaschinen im Einsatz, die mit einer Direkteinspritzung arbeiten. Die Direkteinspritzung besitzt das Potential einer deutlichen Verbrauchseinsparung und stellt damit einen wichtigen Baustein für die notwendige Absenkung der verkehrsbedingten CO₂ - Emissionen dar. Um die Einlaßströmung in den Einzelkanälen hinsichtlich des Betriebsbereiches bzw. der Drehzahl zu optimieren, weist einer der zwei zu einem Zylinder führenden Einzelkanäle eine Drallklappe auf. Während bei Vollast und/oder hoher Drehzahl kein Drall, jedoch optimale Füllung erforderlich ist, ist für niedrige Last jedoch ein leichter Drall erwünscht, der die Rauchemission deutlich senken kann. Für die niedrige Last wiederum ist die Füllung von geringer Bedeutung. Die Anordnung der Drallklappen im Saugrohr erfordert einen relativ großen konstruktiven Aufwand. Servicearbeiten sind dementsprechend mit großem Montage- und Demontageaufwand verbunden.

Hiervon ausgehend liegt der Erfindung die Aufgabe zugrunde, Maßnahmen aufzufinden, die die oben genannten Nachteile vermeiden.

Diese Aufgabe wird dadurch gelöst, dass die Trägerelemente an einem Gehäuseteil angeordnet sind, wobei in dem Gehäuseteil ein Antrieb und ein Antriebsmechanismus zur Verstellung der Drallklappen gelagert sind und das Saugrohr quer zu den Einzelkanälen verlaufende schlitzförmige Aussparungen aufweist, derart, dass wenn das Gehäuseteil auf dem Saugrohr befestigt ist, die Trägerelemente in die entsprechenden schlitzförmigen Aussparungen eingreifen.

Auf diese Weise wird ein Luftansaugkanalsystem geschaffen, bei dem die Drallklappen, die zugehörigen Trägerelemente sowie der Antrieb und der Antriebsmechanismus als eigenständige Moduleinheit vorliegen. Dies bietet den Vorteil, dass sich der Einbau der Drallklappen auf einen minimalen Montageaufwand reduziert. Auch ist die Moduleinheit an sich leicht und kostengünstig zu fertigen. Eventuelle Servicearbeiten sind lediglich mit geringem Montage- und Demontageaufwand verbunden.

in besonders vorteilhafter Weise ist der Antrieb ein Elektromotor, der über eine Zahnstange und in dem Gehäuseteil gelagerten Zahnrädern die Drallklappen antreibt. Das Gehäuseteil kann beispielsweise mit dem Saugrohr verklipst oder mit ihm verschraubt sein. Besonders vorteilhaft ist es dabei, wenn eine zum Gehäuseteil gerichtete Anlagefläche des Trägerelementes in Bezug auf die Drehachse der Drallklappen in Längsrichtung des Gehäuseteils asymmetrisch ausgeführt ist. Dadurch ist es möglich mit einem Gehäuseteil und einem Antriebsmechanismus Versionen für verschiedene Zylinderabstände zu realisieren.
Auch ist es möglich, dass die Trägerelemente und das Gehäuseteil aus einem Stück gefertigt sind. Darüber hinaus ist es vorteilhaft, wenn dass Gehäuseteil, die Drallklappen, die Trägerelemente und die Zahnräder Kunststoffspritzteile sind.

Ausführungsbeispiele der Erfindung sind dargestellt, und werden nachfolgend beschrieben.

Die Zeichnung zeigt
- Fig.1: das erfindungsgemäße Luftansaugkanalsystem mit geöffnetem Gehäuseteil in einer perspektivischen Ansicht,
- Fig.2: eine perspektivische Ansicht des geöffneten Gehäuseteils mit angeklipsten Trägerelementen und
- Fig.3: eine perspektivische Ansicht des Trägerelementes mit eingesetzter Drallklappe.

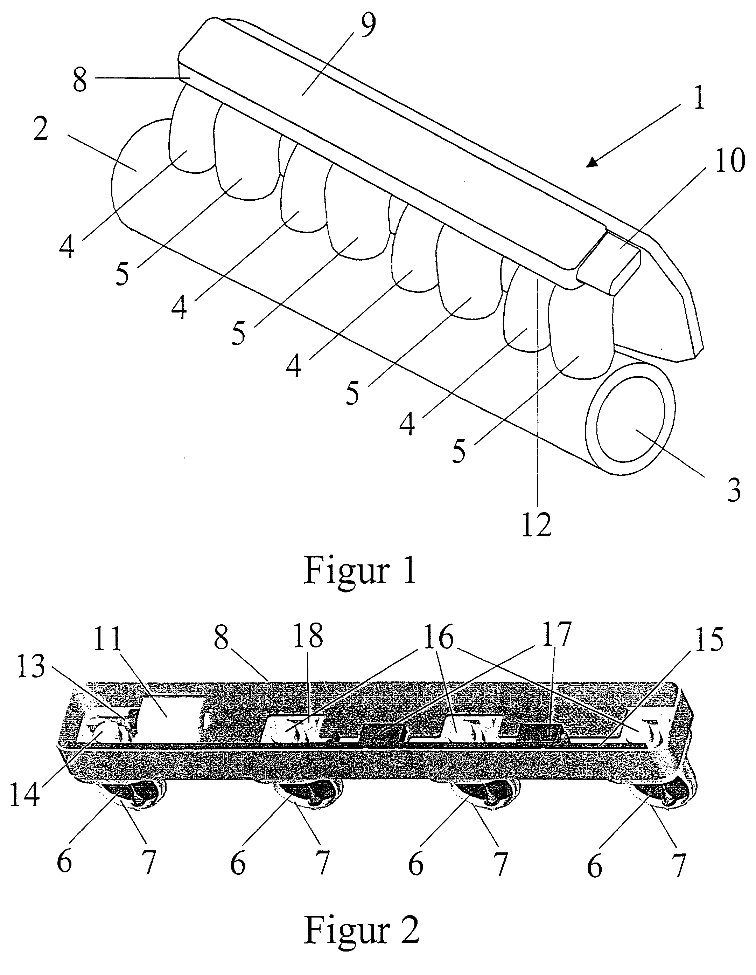

Fig. 1 zeigt das erfindungsgemäße Luftansaugkanalsystem 1. Ein Saugrohr 2 weist dabei einen Einlaßströmungsweg 3 auf, von dem jeweils zwei zu jedem Zylinder der nicht dargestellten Brennkraftmaschine führenden Einzelkanälen 4, 5, abzweigen. Dabei besitzt jeder Einzelkanal 4 eine Drallklappe 6 (siehe Fig.2) zur Optimierung der Einlaßströmung in bezug auf den Betriebsbereich bzw. die Drehzahl.

Wie in Fig. 2 näher dargestellt sind die Drallklappen in Trägerelementen 7 an einem Gehäuseteil 8 angeordnet. Im vorliegenden Ausführungsbeispiel ist das Gehäuseteil 8 durch ein aufgeschweißtes Deckelelement 9 abgeschlossen. Des weiteren ist ein Steckerelement 10 dargestellt zur elektrischen Verbindung des Antriebes 11. Die Trägerelemente 7 reichen in schlitzförmige Aussparungen 12, die in den Einzelkanälen 4 angebracht sind.

Fig. 2 zeigt das geöffnete Gehäuseteil 8 mit den an der Unterseite angeordneten Trägerelementen 7 und den darin gelagerten Drallklappen 6. Zur Steuerung der Drallklappen 6 treibt der Elektromotor 11 über eine Kupplung 13 im vorliegenden Ausführungsbeispiel ein erstes Zahnrad 14 an. Dieses Zahnrad 14 steht wiederum mit einer Zahnradstange 15 in Eingriff, die wiederum die Zahnräder 16 antreibt. Des weiteren sind Endlagenschalter 17 für die Zu- bzw. Auf-Position der Drallklappen vorgesehen. Es sollte deutlich sein, dass der dargestellte Antriebsmechanismus zur Steuerung der Drallklappen 6 lediglich eine mögliche Variante darstellt. An Stelle der Zahnradstange 15 kann auf bekannte Weise auch eine Spindel eingesetzt werden.

Wie in Fig. 2 angedeutet sind die Trägerelemente 7 durch Klipselemente 18 mit dem Gehäuseteil 8 verklipst.

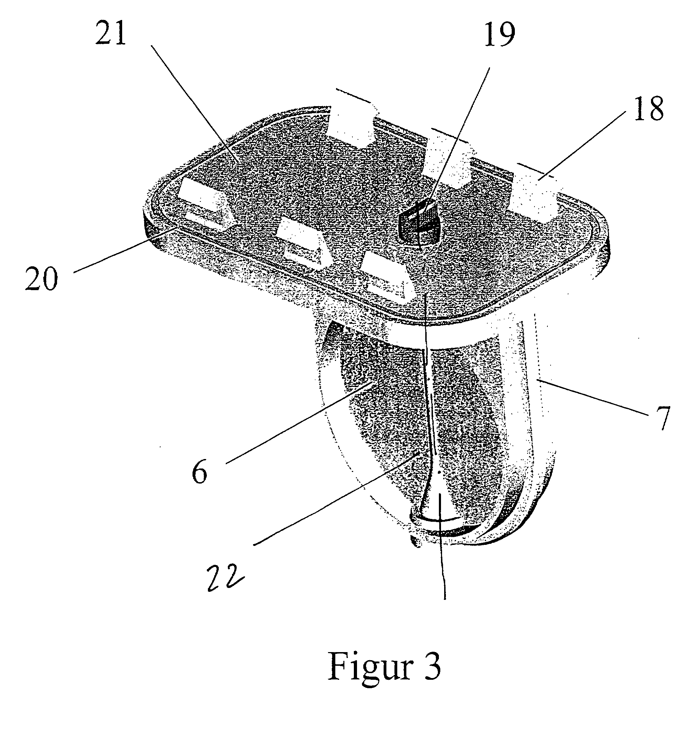

Fig. 3 zeigt das Trägerelement 7 in einer perspektivischen Einzelansicht. Deutlich zu erkennen sind die Klipselemente 18 mit denen das Trägerelement 7 am Gehäuseteil 8 befestigt wird. Des weiteren ist ein Kupplungselement 19 dargestellt das einerseits mit der Drallklappe 6 und andererseits mit den Zahnrädern 14, 16 in Eingriff steht. Der umlaufende Dichtring 20 dichtet das Trägerelement 7 gegenüber dem Gehäuseteil 8 ab. Eine zum Gehäuseteil 8 gerichtete Anlagefläche 21 des Trägerelementes 7 kann in Bezug auf die Drehachse 8 asymmetrisch ausgeführt sein. Auf diese Weise ist es möglich die Drallklappen 6 verschiedenen Zylinderabständen der Brennkraftmaschine dadurch anzupassen, dass die Trägerelemente 7 entweder mit der Drehachse nach innen oder nach außen gerichtet in das Gehäuseteil 8 eingesetzt werden.

Es sollte deutlich sein, dass das Trägerelement 7 und das Gehäuseteil 8 natürlich auch aus einem Stück gefertigt sein könnte. Die Klipselemente 18 und der umlaufende Dichtring 20 entfallen in diesem Fall. In besonders vorteilhafter Weise sind das Gehäuseteil 8, die Drallklappen 6, die Zahnräder 14, 16 und die Trägerelemente 7 zusammen im Kunststoffspritzverfahren gefertigt worden.

## Patentansprüche

1. Luftansaugkanalsystem für eine Brennkraftmaschine mit einem Saugrohr, das zwei zu jedem Zylinder der Brennkraftmaschine führende Einzelkanäle aufweist, die sich von einem gemeinsamen Einlaßströmungsweg abzweigen, wobei jeweils einer der beiden Einzelkanäle eine Drallklappe aufweist, die in einem Trägerelement gelagert ist, **dadurch gekennzeichnet, dass** die Trägerelemente (7) an einem Gehäuseteil (8) angeordnet sind, wobei in dem Gehäuseteil (8) ein Antrieb (11) und ein Antriebsmechanismus (13, 14, 15, 16) zur Verstellung der Drallklappen (6) gelagert sind und das Saugrohr (2) quer zu den Einzelkanälen (4, 5) verlaufende schlitzförmige Aussparungen (12) aufweist, derart, dass wenn das Gehäuseteil (8) auf dem Saugrohr (2) befestigt ist, die Trägerelemente (7) in die entsprechenden schlitzförmigen Aussparungen eingreifen.

2. Luftansaugkanalsystem nach Anspruch 1, **dadurch gekennzeichnet, dass** der Antrieb (11) ein Elektromotor ist, der über eine Zahnstange (15) und in dem Gehäuseteil (8) gelagerten Zahnräder (14, 16) die Drallklappen (6) antreibt.

3. Luftansaugkanalsystem nach Anspruch 1 oder 2, **dadurch gekennzeichnet, dass** das Gehäuseteil (8) mit dem Saugrohr (2) verklipst oder verschraubt ist.

4. Luftansaugkanalsystem nach einem der vorhergehenden Ansprüche, **dadurch gekennzeichnet, dass** eine zum Gehäuseteil (8) gerichtete Anlagefläche (21) des Trägerelementes (7) in Bezug auf die Drehachse (22) der Drallklappe (6) in Längsrichtung des Gehäuseteils (8) asymmetrisch ausgeführt ist.

5. Luftansaugkanalsystem nach einem der vorhergehenden Ansprüche, **dadurch gekennzeichnet, dass** die Trägerelemente (7) und das Gehäuseteil (8) aus einem Stück gefertigt sind.

6. Luftansaugkanalsystem nach einem der vorhergehenden Ansprüche, **dadurch gekennzeichnet, dass** das Gehäuseteil (8), die Drallklappen (6), die Trägerelemente (7) und die Zahnräder (14, 16) Kunststoffspritzteile sind.

## Claims

1. Air-intake port system for an internal combustion engine having an intake manifold, which has two individual ports leading to each cylinder of the i.c. engine, which branch off from a common intake flow path, wherein a respective one of the two individual ports has a swirl flap, which is supported in a carrier element, **characterized in that** the carrier elements (7) are disposed on a housing part (8), wherein a drive (11) and a drive mechanism (13, 14, 15, 16) for adjusting the swirl flaps (6) are supported in the housing part (8) and the intake manifold (2) has slot-shaped recesses (12) extending at right angles to the individual ports (4, 5), such that, when the housing part (8) is fastened on the intake manifold (2), the carrier elements (7) engage into the corresponding slot-shaped recesses.

2. Air-intake port system according to claim 1, **characterized in that** the drive (11) is an electric motor, which via a toothed rack (15) and gear wheels (14, 16) supported in the housing part (8) drives the swirl flaps (6).

3. Air-intake port system according to claim 1 or 2, **characterized in that** the housing part (8) is clipped on or screw-connected to the intake manifold (2).

4. Air-intake port system according to one of the preceding claims, **characterized in that** a bearing surface (21) of the carrier element (7) directed towards the housing part (8) is constructed, in relation to the axis of rotation (22) of the swirl flap (6), asymmetrically in longitudinal direction of the housing part (8).

5. Air-intake port system according to one of the preceding claims, **characterized in that** the carrier elements (7) and the housing part (8) are manufactured from one piece.

6. Air-intake port system according to one of the preceding claims, **characterized in that** the housing part (8), the swirl flaps (6), the carrier elements (7) and the gear wheels (14, 16) are plastic injection-moulded parts.

## Revendications

1. Système formant canal d'admission d'air pour un moteur à combustion interne comportant une tubulure d'admission, qui comporte deux pipes distinctes conduisant à chaque cylindre qui bifurquent à partir d'un conduit de flux d'admission commun, dans lequel l'une des deux pipes distinctes présente une vanne papillon qui est supportée dans un élément porteur **caractérisé en ce que** les éléments porteurs (7) sont montés sur une pièce formant boîtier (8), un entraînement (11) et un mécanisme d'entraînement (13, 14, 15, 16) pour le déplacement des vannes papillons (6) étant supportés dans la pièce formant boîtier (8) et la tubulure d'admission (2) présente des évidements (12) en forme de fentes s'étendant transversalement par rapport aux pipes distinctes (4, 5), de sorte que lorsque la pièce formant boîtier (8) est fixée sur la tubulure d'admission (2), les éléments porteurs (7) viennent en prise dans les évidements en forme de fentes correspondants.

2. Système formant canal d'admission d'air selon la revendication 1, **caractérisé en ce que** l'entraînement (11) est un moteur électrique, qui entraîne les vannes papillons (6) par l'intermédiaire d'une crémaillère (15) et de roues dentées (14, 16) supportées dans la pièce formant boîtier (8).

3. Système formant canal d'admission d'air selon la revendication 1 ou 2, **caractérisé en ce que** la pièce formant boîtier (8) est encliquetée ou vissée avec la tubulure d'admission (2).

4. Système formant canal d'admission d'air selon l'une des revendications précédentes, **caractérisé en ce qu'**une surface d'appui (21) de l'élément porteur (7) orientée vers la pièce formant boîtier (8) est réalisée asymétriquement par rapport à l'axe de rotation (22) de la vanne papillon (6) dans le sens longitudinal de la pièce formant boîtier (8).

5. Système formant canal d'admission d'air selon l'une des revendications précédentes, **caractérisé en ce que** les éléments porteurs (7) et la pièce formant boîtier (8) sont réalisés d'un seul tenant.

6. Système formant canal d'admission d'air selon l'une des revendications précédentes, **caractérisé en ce que** la pièce formant boîtier (8), les vannes papillons (6), les éléments porteurs (7) et les roues dentées (14, 16) sont des pièces en matière plastique injectée.
